# EUROPEAN PATENT APPLICATION

(11) **EP 3 715 620 A1**
(43) Date of publication of application: **30.09.2020**
(21) Application number: 20165578.4
(22) Date of filing: 25.03.2020
(51) Int. Cl.: F02M 63/00, F02M 63/02

(54) **HIGH PRESSURE VALVE OF A COMMON RAIL**

(30) Priority: 26.03.2019 GB 201904119
(71) Applicant: Delphi Technologies IP Limited, Saint Michael (BB)
(72) Inventor: KIRIS, Sencer, Izmir (TR); ERTAN, CAN, 35090 IZMIR (TR); YALCIN, Mahsuni, Izmir (TR)
(74) Representative: Delphi France SAS

(57) **Abstract**

A high pressure valve of a common rail for an internal combustion engine of an automotive vehicle, said valve comprising:
a body and a needle,
the body being provided with a bore extending along a longitudinal axis, the fuel exit forming a needle seat,
the needle extending from a head to a tip, and being configured to reciprocate in the bore along said longitudinal axis from a closed position to an open position,
a coil and an armature arranged to be controlled by the coil such that, in the closed position, the tip of the needle closes the fuel exit, and, in the open position, the tip of the needle is spaced apart from the fuel exit to open the fuel exit,
a housing (30) surrounding at least partially the coil,
wherein the housing (30) is made of an elastomer matrix with magnetic particles.

## Description

### TECHNICAL FIELD

The present invention relates to an improved high pressure valve of a common rail for an internal combustion engine of an automotive vehicle.

### BACKGROUND OF THE INVENTION

A common rail is a direct fuel injection system for diesel or gasoline engines that delivers high pressure fuel from a high pressure pump to the engine injectors. Known common rails include a high pressure valve at one end and a fuel pressure sensor at another end. Said high pressure valve is an electromechanical safety valve that is used to prevent the common rail from being damaged when overpressure conditions occur.

The high pressure valve comprises a body and a needle, the body being provided with a bore along a longitudinal axis, and comprising a fuel inlet and a fuel exit, the fuel exit forming a needle seat, the needle extending from a head to a tip, and being configured to reciprocate in the bore along said longitudinal axis from a closed position to an open position, a coil and an armature arranged to be controlled by the coil such that, in the closed position, the tip of the needle closes the fuel exit, and, in the open position, the tip of the needle is spaced apart from the fuel exit to open the fuel exit and a metallic housing surrounding at least partially the coil.

However, the high pressure valves of the prior art are quite heavy and require a coating of the housing aiming at gaining magnetic properties and protecting the housing, thus rendering their process of manufacturing time consuming and expensive.

### SUMMARY OF THE INVENTION

Accordingly, it is an object of the present invention to resolve the above mentioned problems in providing a high pressure valve of a common rail for an internal combustion engine of an automotive vehicle, said valve comprising a body and a needle, the body being provided with a bore extending along a longitudinal axis, the fuel exit forming a needle seat, the needle extending from a head to a tip, and being configured to reciprocate in the bore along said longitudinal axis from a closed position to an open position, a coil and an armature arranged to be controlled by the coil such that, in the closed position, the tip of the needle closes the fuel exit, and, in the open position, the tip of the needle is spaced apart from the fuel exit to open the fuel exit, a housing surrounding at least partially the coil, wherein the housing is made of a PA 6.6 GF30 matrix with magnetic particles.

Thanks to the claimed housing, the total weight of the high pressure valve is reduced. Also, the process of manufacturing is simpler.

The housing may be a sleeve comprising a longitudinal wall extending along the longitudinal axis and a bottom wall, the bottom wall extending orthogonally to the longitudinal wall, wherein magnetic particles of the magnetic particles are located inside the longitudinal wall and are of an elongated shape, a length of said particles extending parallel to the longitudinal axis.

Magnetic particles of the magnetic particles may be located inside the bottom wall and of an elongated shape, a length of said particles extending transversally.

The magnetic particles may be selected among molyperm alloy, Fe-Nd-B alloy, Fe-C-P-B-Si-Mo, Fe-B-Si-Nb, Fe-P-B-Si.

Particles of the magnetic particles may have a size in a range of 1 µm to 50 µm.

Particles of the magnetic particles may have a mass concentration between 3 to 5 *g*/*cm*³, , the mass concentration being defined as the mass of the particles and mass of polymer matrix divided by the volume of the total mixture of the matrix and the particles.

Particles of the magnetic particles may be oriented parallel to magnetic field lines.

The present invention also concerns a process for manufacturing a high pressure valve of a common rail for a high-pressure pump as per anyone of the preceding claims, comprising a step of mixing the magnetic particles inside the matrix resin and a step of moulding, comprising a step of injection said mixing in a mould.

The process may comprise a step of applying a magnetic field during the mixing injection.

The applied magnetic field may have a magnitude in a range of 0,07T to 0,1 IT.

Magnetic field lines of the magnetic field may extend parallel to the longitudinal axis in the longitudinal wall and transversally in the bottom wall.

### BRIEF DESCRIPTION OF THE DRAWINGS

The present invention is now described by way of example with reference to the accompanying drawings in which:
Figure 1 is a schematic longitudinal section of a high pressure valve as per the invention.
Figure 2 is a perspective view of a housing of the valve of figure 1.
Figure 3 is a perspective view of a part of the housing of figure 2, the housing being longitudinally cut.
Figure 4 is a longitudinal section of a sleeve during a manufacturing process of the housing of figure 2 as per the invention.

### DESCRIPTION OF THE PREFERRED EMBODIMENTS

As can be seen from the figures, a high pressure valve 10 for an internal combustion engine is fixed to a common rail 100 so as to control fuel pressure in the common rail 100.

The valve 10 comprises a body 12 and a needle 14. The body 12 is provided with a bore 16 extending along an axis, called longitudinal axis X, comprising a fuel inlet and a fuel exit 20. The needle 14 extends from a head 22 to a tip 24 and is configured to reciprocate in the bore 16 along the longitudinal axis X from a closed position to an open position, as will be detailed later. The fuel exit 20 forms a needle tip seat.

As shown in the figures, the valve 10 also comprises a coil 26 and an armature 28. The armature 28 is arranged to be controlled by the coil 26 such that, in the closed position, the tip 24 of the needle 14 closes the fuel exit 20, and, in the open position, the tip 24 of the needle 14 is spaced apart from the fuel exit 20 to open the fuel exit 20.

Thus, the high pressure valve 10 controls the pressure of the fuel in the common rail.

As can be seen from the figures, the high pressure valve 10 also comprises a housing 30 that surrounds at least partially the coil 26.

Thanks to the housing 30, the magnetic circuit is completed, the coil is protected and a mechanical rotation resistance is generated.

The housing is made of an elastomer matrix with magnetic particles, preferably PA 6.6 GF30.

Thanks to this design, the total weight of the valve 10 is reduced and there is no need for coating, which simplifies the process of manufacturing of the housing.

The housing 30 will be detailed later.

The high pressure valve 10 also comprises an overmolded connector 32 to electrically connect the valve 10 to an electrical source.

As can be deduced from the figure, when the coil 26 is electrically supplied, then the armature 28 makes contact with the coil 26, which closes the valve, the needle tip 24 being seated in the needle seat 20, and pressure rises in the common rail 100.

When the coil 26 is not electrically supplied, a spring 34 makes the needle 20 go up, which opens the valve, the needle tip being spaced apart from the needle seat 20.

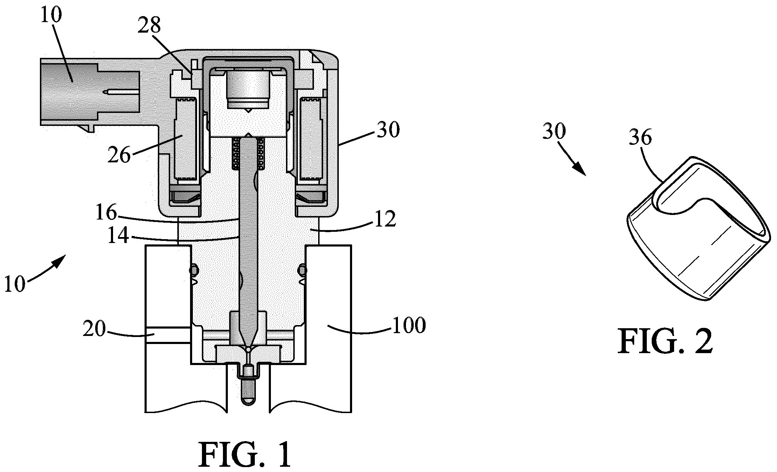

The housing 30 is now described in reference to figures 2 to 4.

As can be seen from these figures, the housing 30 is a hollow sleeve with tubular shape.

The sleeve presents a notch 36 for receiving the connector 34 in a longitudinal wall 38 of the housing 30.

The longitudinal wall 38 extends along the longitudinal axis X.

The sleeve also comprises a bottom wall 40 extending orthogonally to the longitudinal wall 40.

Preferably, the magnetic particles are selected from molypermalloy particle and/or Fe-Nd-B alloy particle and/or Fe-C-P-B-Si-Mo particle and/or Fe-B-Si-Nb particle, and/or Fe-P-B-Si particle.

Advantageously, particles P of the magnetic particles have a size in a range of 1 µm to 50 µm.

Preferably, particles P of the magnetic particles comprise a mass concentration between 3 to 5 *g*/*cm*³, the mass concentration being defined as the mass of the particles and mass of polymer matrix divided by the volume of the total mixture of the matrix and the particles.

The particles of the magnetic particles are mostly oriented parallel to magnetic field lines, the particles having magnetic moments that orients along the magnetic field lines MFL.

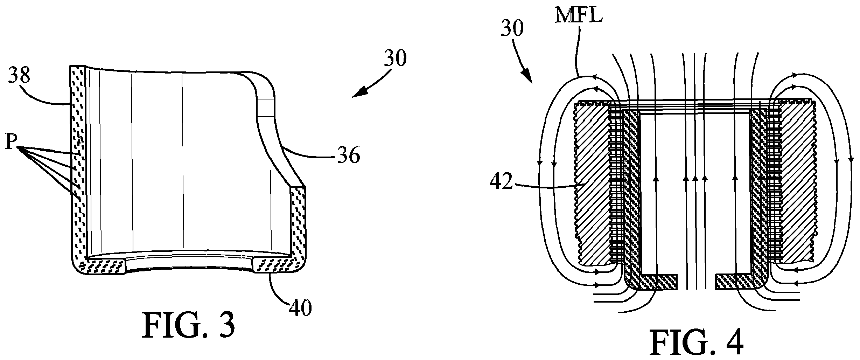

More precisely, as can be seen from figure 3, the particles P being elongated along their length L, the length L of the particles located inside the longitudinal wall is disposed parallel to the longitudinal axis X, while the length of the particles located inside the bottom wall forms an angle with the longitudinal axis. Preferably, the length L extends horizontally.

These features ensure that the housing 30 gets the most suitable magnetic behaviour.

The present invention is also related to a process for manufacturing the high pressure valve 10, the process comprising:
- a step of mixing the magnetic particles inside the matrix resin, and
- a step of moulding, wherein said mixing is injected in a mould.

As can be seen from figure 4, the process also comprises a step of applying a magnetic field during the mixing injection, which orients the particles P along the magnetic field lines MFL while the matrix is still soft.

More precisely, a solenoid 42 is disposed in a plastic overmoulding mold and applies said magnetic field that generates the magnetic field lines MFL.

As can be seen from figure 4, the magnetic field lines MFL extend longitudinally in the longitudinal wall 38 and horizontally in the bottom wall 40, thus orienting the particles P as already described.

Advantageously, the applied magnetic field has a magnitude in a range of 0,07T to 0,11T.

Thanks to the present invention, the high pressure valve of the common rail is lighter and easier to manufacture. Also, it can be adapted to any use of the high valve pressure since its magnetic properties can be changed only by changing the particles material and/or concentration.

Please note that the invention is not limited to the embodiments as illustrated. In particular, it is possible to choose where to inject the particles. For instance, one cannot inject particles in a non functional zone of the housing.

### LIST OF REFERENCES

- X: longitudinal axis
- P: particles of the magnetic particles
- MFL: magnetic field lines
- L: length of particles

- 10: high pressure valve
- 12: body
- 14: needle
- 16: bore
- 20: fuel exit
- 22: needle head
- 24: needle tip
- 26: coil
- 28: armature
- 30: housing
- 32: connector
- 34: spring
- 36: notch
- 38: longitudinal wall
- 40: bottom wall
- 42: solenoid

## Claims

1. A high pressure valve of a common rail for an internal combustion engine of an automotive vehicle, said valve comprising:
a body (12) and a needle (14),
the body (12) being provided with a bore (16) extending along a longitudinal axis (X), the fuel exit (20) forming a needle seat,
the needle (14) extending from a head (22) to a tip (24), and being configured to reciprocate in the bore (16) along said longitudinal axis (X) from a closed position to an open position,
a coil (26) and an armature (28) arranged to be controlled by the coil (26) such that, in the closed position, the tip (24) of the needle (14) closes the fuel exit (20), and, in the open position, the tip (24) of the needle (14) is spaced apart from the fuel exit (20) to open the fuel exit (20),
a housing (30) surrounding at least partially the coil (26),
wherein the housing (30) is made of a elastomer matrix with magnetic particles.

2. A valve as per claim 1, wherein the elastomer matrix comprises PA6.6 GF30.

3. A valve as per claim 1 or 2, wherein the housing (30) is a sleeve comprising a longitudinal wall (38) extending along the longitudinal axis (X) and a bottom wall (40), the bottom wall (40) extending orthogonally to the longitudinal wall, wherein magnetic particles of the magnetic particles are located inside the longitudinal wall and are of an elongated shape, a length of said particles extending parallel to the longitudinal axis (X).

4. A valve as per claim 3, wherein magnetic particles of the magnetic particles are located inside the bottom wall (40) and are of an elongated shape, a length of said particles extending with an angle.

5. A valve as per anyone of the preceding claims, wherein the magnetic particles are selected among molypermalloy, Fe-Nd-B alloy, Fe-C-P-B-Si-Mo, Fe-B-Si-Nb, Fe-P-B-Si.

6. A valve as per anyone of the preceding claims, wherein particles of the magnetic particles have a length size in a range of 1 µm to 50 µm.

7. A valve as per anyone of the preceding claims, wherein a mass concentration of the magnetic particles is comprised between 3 to 5 *g*/*cm*³, the mass concentration being defined as the mass of the particles and mass of polymer matrix divided by the volume of the total mixture of the matrix and the particles.

8. A process for manufacturing a high pressure valve of a common rail for a high-pressure pump as per anyone of the preceding claims, comprising a step of mixing the magnetic particles inside the matrix resin and a step of moulding, comprising a step of injection said mixing in a mould.

9. A process as per claim 8, comprising a step of applying a magnetic field during the mixing injection.

10. A process as per claim 9, wherein the applied magnetic field has a magnitude in a range of 0,07T to 0,11T.

11. A process as per claim 9 or 10, wherein magnetic field lines of the magnetic field extend parallel to the longitudinal axis (X) in the longitudinal wall and transversally in the bottom wall.
